(19) Europäisches Patentamt
European Patent Office
Office européen des brevets

(11) Veröffentlichungsnummer: **0 133 267**
**A1**

(12) # EUROPÄISCHE PATENTANMELDUNG

(21) Anmeldenummer: **84108682.0**

(22) Anmeldetag: **23.07.84**

(51) Int. Cl.[4]: **C 08 F 10/00**, C 08 F 4/64

(30) Priorität: **30.07.83 DE 3327520**

(43) Veröffentlichungstag der Anmeldung: **20.02.85 Patentblatt 85/8**

(84) Benannte Vertragsstaaten: **AT BE DE FR GB IT NL**

(71) Anmelder: **BASF Aktiengesellschaft, Carl-Bosch-Strasse 38, D-6700 Ludwigshafen (DE)**

(72) Erfinder: **Staiger, Gerhard, Dr., Virchowstrasse 26, D-6712 Bobenheim-Roxheim (DE)**
Erfinder: **Gruber, Wolfgang, Dr., Lorscher Ring 2 b, D-6710 Frankenthal (DE)**

(54) **Verfahren zum Herstellen von Homo- und Copolymerisaten von alpha-Monoolefinen.**

(57) Rahmen ist das Herstellen von Polymerisaten von α-Monoolefinen mittels eines Ziegler-Natta-Katalysatorsystems aus (1) einer Titankomponente, die erhalten wird, indem man zunächst (1.1) in einer ersten Stufe (1.1.1) Titantetrachlorid mit (1.1.2) einem Benzolcarbonsäurealkylester zu einer Flüssigkeit reagieren läßt, dann (1.2) in einer zweiten Stufe (1.2.1) die aus (1.1) resultierende Flüssigkeit mit (1.2.2) einem Magnesiumalkoholat zu einem Feststoff umsetzt, und schließlich (1.3) in einer dritten Stufe (1.2.1) Titantetrachlorid mit (1.3.2) dem aus (1.2) resultierenden Feststoff sowie – gegebenenfalls – zusätzlich (1.3.3) weiterem Benzolcarbonsäurealkylester zu der Titankomponente (1) (= Feststoff) umsetzt, (2) einem Aluminiumalkyl sowie (3) einem Cokatalysator. Charakteristikum ist, daß man beim Herstellen von (1) als Benzolcarbonsäurealkylester unter (1.1.2) einen Diester der Phthalsäure mit einem bestimmten primären, secundären oder tertiären Alkanol verwendet hat, und als (3) ein bestimmtes Trialkoxiphenylsilan einsetzt. Ergebnis sind hoch-stereoreguläre und morphologisch ausgezeichnete Polymerisate.

EP 0 133 267 A1

BASF Aktiengesellschaft O.Z. 0050/36666

Verfahren zum Herstellen von Homo- und Copolymerisaten von α-Monoolefinen

Die vorliegende Erfindung liegt im Rahmen eines Verfahrens zum Herstellen von Homo- und Copolymerisaten von $C_2$- bis $C_6$-α-Monoolefinen bei Temperaturen von 20 bis 160, insbesondere 50 bis 120°C und Drücken von 1 bis 100, insbesondere 20 bis 70 bar mittels eines Ziegler-Natta-Katalysatorsystems aus

(1) einer modifizierten Titankomponente, die erhalten wird, indem man zunächst

(1.1) in einer ersten Stufe

(1.1.1) 100 Gew.-Teile Titantetrachlorid mit

(1.1.2) 1 bis 10, insbesondere 2 bis 5 Gew.-Teilen eines Benzolcarbonsäurealkylesters

zusammenbringt und das Zusammengebrachte so lange auf einer Temperatur im Bereich von 50 bis 120, insbesondere 70 bis 110°C hält, bis es als homogene Flüssigkeit vorliegt, dann

(1.2) in einer zweiten Stufe

(1.2.1) die aus Stufe (1.1) resultierende Flüssigkeit mit

(1.2.2) einem, einen Teilchendurchmesser von 0,05 bis 5,0, insbesondere 0,5 bis 3 mm aufweisenden Magnesiumalkoholat der Formel $Mg(OD)_2$, worin D steht für einen einwertigen $C_1$- bis $C_8$-Kohlenwasserstoffrest gesättigt-aliphatischer und/oder aromatischer Natur, vorzugsweise einen einwertigen $C_1$- bis $C_6$-Kohlenwasserstoffrest gesättigt-aliphatischer Natur, und insbesondere einen $C_2$- bis $C_4$-Alkylrest,

zusammenbringt, mit der Maßgabe, daß ein Molverhältnis Benzolcarbonsäurealkylester (1.1.2) aus Stufe (1.1) : Magnesiumalkoholat (1.2.2) von 1 : 15 bis 1 : 2, insbesondere 1 : 10 bis 1 : 4 gegeben ist, das Zusammengebrachte unter ständiger Durchmischung 0,1 bis 2, insbesondere 0,2 bis 1 Stunden auf einer Temperatur im Bereich von 40 bis 180, insbesondere 80 bis 140°C hält und den dabei resultierenden Feststoff unter Abtrennung der verbleibenden flüssigen Phase isoliert, und schließlich

HWz/P

(1.3) in einer dritten Stufe

(1.3.1) 100 Gewichtsteile Titantetrachlorid mit

(1.3.2) 1 bis 50, insbesondere 1 bis 20 Gewichtsteilen des aus Stufe (1.2) resultierenden Feststoffs sowie - gegebenenfalls - zusätzlich

(1.3.3) bis zu 15, insbesondere 1 bis 7 Gewichtsteilen des auch unter (1.1.2) eingesetzten Benzolcarbonsäurealkylesters

zusammenbringt, das Zusammengebrachte unter ständiger Durchmischung 0,1 bis 2, insbesondere 0,2 bis 1 Stunden auf einer Temperatur im Bereich von 40 bis 180, insbesondere 80 bis 140°C hält und den dabei resultierenden Feststoff - als die modifizierte Titankomponente (1) - unter Abtrennung der verbleibenden flüssigen Phase isoliert,

(2) einem Aluminiumalkyl der Formel

$$X - \underset{\substack{| \\ Z}}{Al} - Y$$

worin stehen
X sowie
Y für eine nicht mehr als 8, insbesondere eine nicht mehr als 4 Kohlenstoffatome aufweisene Alkylgruppe,
Z für eine nicht mehr als 8 Kohlenstoffatome aufweisende Alkylgruppe oder Chlor, insbesondere eine nicht mehr als 4 Kohlenstoffatome aufweisende Alkylgruppe,

sowie

(3) einem Cokatalysator,

mit den Maßgaben, daß das Atomverhältnis Titan aus der modifizierten Titankomponente (1) : Aluminium aus dem Aluminiumalkyl (2) 1 : 10 bis 1 : 500, insbesondere 1 : 20 bis 1 : 200, und das Molverhältnis Aluminiumalkyl (2) : Cokatalysator (3) 10 : 8 bis 10 : 0,3, insbesondere 10 : 5 bis 10 : 0,5 beträgt.

Ein solches Verfahren ist bekannt; - wozu im gegebenen Zusammenhang insbesondere auf die EP-PS 17 895 als Publikation zu verweisen ist.

Die Aufgabenstellung, die zur vorliegenden Erfindung geführt hat, war, das oben beschriebene bekannte - mit gutem Erfolg arbeitende - Verfahren so weiter auszubilden, daß Polymerisate anfallen, die besonders hoch-stereoregulär sind und deren morphologische Eigenschaften, insbesondere hinsichtlich einer möglichst einheitlichen Kornform, optimiert sind.

Es wurde gefunden, daß diese Aufgabe gelöst werden kann, wenn man beim eingangs definierten Verfahren (i) als modifizierte Titankomponente (1) eine solche einsetzt, bei deren Herstellung man als Benzolcarbonsäurealkylester unter (1.1.2) einen Diester der Phthalsäure mit einem Alkanol einer bestimmten Art verwendet hat, und (ii) als Cokatalysator (3) ein Trialkoxiphenylsilan einer bestimmten Art einsetzt.

Gegenstand der vorliegenden Erfindung ist dementsprechend ein Verfahren zum Herstellen von Homo- und Copolymerisaten von $C_2$- bis $C_6$-$\alpha$-Monoolefinen bei Temperaturen von 20 bis 160, insbesondere 50 bis 120°C und Drücken von 1 bis 100, insbesondere 20 bis 70 bar mittels eines Ziegler-Natta-Katalysatorsystems aus

(1) einer modifizierten Titankomponente, die erhalten wird, indem man zunächst

(1.1) in einer ersten Stufe

(1.1.1) 100 Gew.-Teile Titantetrachlorid mit

(1.1.2) 1 bis 10, insbesondere 2 bis 5 Gew.-Teilen eines Benzolcarbonsäurealkylesters

zusammenbringt und das Zusammengebrachte so lange auf einer Temperatur im Bereich von 50 bis 120, insbesondere 70 bis 110°C hält, bis es als homogene Flüssigkeit vorliegt, dann

(1.2) in einer zweiten Stufe

(1.2.1) die aus Stufe (1.1) resultierende Flüssigkeit mit

(1.2.2) einem, einen Teilchendurchmesser von 0,05 bis 5,0, insbesondere 0,5 bis 3 mm aufweisenden Magnesiumalkoholat der Formel $Mg(OD)_2$, worin D steht für einen einwertigen $C_1$- bis $C_8$-Kohlenwasserstoffrest gesättigt-aliphatischer und/oder aromatischer Natur, vorzugsweise einen einwertigen $C_1$- bis $C_6$-Kohlenwasserstoffrest gesättigt-aliphatischer Natur, und insbesondere einen $C_2$- bis $C_4$-Alkylrest,

zusammenbringt, mit der Maßgabe, daß ein Molverhältnis Benzolcarbonsäurealkylester (1.1.2) aus Stufe (1.1) : Magnesiumalkoholat (1.2.2) von 1 : 15 bis 1 : 2, insbesondere 1 : 10 bis 1 : 4 gegeben ist, das Zusammengebrachte unter ständiger Durchmischung 0,1 bis 2, insbesondere 0,2 bis 1 Stunde auf einer Temperatur im Bereich von 40 bis 180, insbesondere 80 bis 140°C hält und den dabei resultierenden Feststoff unter Abtrennung der verbleibenden flüssigen Phase isoliert, und schließlich

(1.3) in einer dritten Stufe

(1.3.1) 100 Gewichtsteile Titantetrachlorid mit

(1.3.2) 1 bis 50, insbesondere 1 bis 20 Gewichtsteilen des aus Stufe (1.2) resultierenden Feststoffs sowie - gegebenenfalls - zusätzlich

(1.3.3) bis zu 15, insbesondere 1 bis 7 Gewichtsteilen des auch unter (1.1.2) eingesetzten Benzolcarbonsäurealkylesters

zusammenbringt, das Zusammengebrachte unter ständiger Durchmischung 0,1 bis 2, insbesondere 0,2 bis 1 Stunde auf einer Temperatur im Bereich von 40 bis 180, insbesondere 80 bis 140°C hält und den dabei resultierenden Feststoff - als die modifizierte Titankomponente (1) - unter Abtrennung der verbleibenden flüssigen Phase isoliert,

(2) einem Aluminiumalkyl der Formel

$$X - \underset{\overset{|}{Z}}{Al} - Y$$

worin stehen

X sowie

Y für eine nicht mehr als 8, insbesondere eine nicht mehr als 4 Kohlenstoffatome aufweisende Alkylgruppe,

Z für eine nicht mehr als 8 Kohlenstoffatome aufweisende Alkylgruppe oder Chlor, insbesondere eine nicht mehr als 4 Kohlenstoffatome aufweisende Alkylgruppe

sowie

(3) einem Cokatalysator,

mit den Maßgaben, daß das Atomverhältnis Titan aus der modifizierten Titankomponente (1) : Aluminium aus dem Aluminiumalkyl (2) 1 : 10 bis 1 : 500, insbesondere 1 : 20 bis 1 : 200, und das Molverhältnis Aluminiumalkyl (2) : Cokatalysator (3) 10 : 8 bis 10 : 0,3, insbesondere 10 : 5 bis 10 : 0,5 beträgt.

Das erfindungsgemäße Verfahren ist dadurch gekennzeichnet, daß

(i) als modifizierte Titankomponente (1) eine solche eingesetzt wird, bei deren Herstellung man als Benzolcarbonsäurealkylester unter (1.1.2) einen Diester der Phthalsäure mit einem primären, secundären oder tertiären, nicht mehr als acht Kohlenstoffatome aufweisenden Alkanol, insbesondere dem 2,2-Dimethylpropanol, verwendet hat, und

(ii) als Cokatalysator (3) ein Trialkoxiphenylsilan mit nicht mehr als vier Kohlenstoffatomen pro Alkoxigruppe, insbesondere das Triethoxiphenylsilan, einsetzt.

Zu dem erfindungsgemäßen Verfahren ist im einzelnen das Folgende zu bemerken:

Das Polymerisationsverfahren als solches kann - unter Beachtung der kennzeichnenden Besonderheit - in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren oder Trockenphasen-Polymerisationsverfahren. Die erwähnten technologischen Ausgestaltungen - mit anderen Worten: die technologischen Varianten der Polymerisation von $\alpha$-Monoolefinen nach Ziegler-Natta - sind aus der Literatur und Praxis wohlbekannt, so daß sich nähere Ausführungen zu ihnen erübrigen.

Der Vollständigkeit halber ist zu erwähnen, daß sich beim erfindungsgemäßen Verfahren auch die Molekulargewichte der Polymerisate durch die einschlägig üblichen Maßnahmen regeln lassen, z.B. mittels Reglern, wie insbesondere Wasserstoff.

Des weiteren ist noch festzuhalten, daß beim erfindungsgemäßen Verfahren die Komponenten des Katalysatorsystems in mannigfacher Weise in den Polymerisationsraum eingebracht werden können, z.B. (i) die modifizierte Titankomponente (1) als eine Komponente, das Aluminiumalkyl (2) sowie der

Cokatalysator (3) als zwei weitere Komponenten alle örtlich gemeinsam, (ii) die gleichen drei Komponenten alle örtlich getrennt voneinander, (iii) die modifizierte Titankomponente (1) einerseits und ein Gemisch aus (2) und (3) andererseits örtlich getrennt voneinander - was insbesondere beim Trockenphasen-Polymerisationsverfahren von Vorteil sein kann - oder (iiii) ein Gemisch aus der modifizierten Titankomponente (1) und dem Cokatalysator (3) einerseits und das Aluminiumalkyl (2) andererseits örtlich getrennt voneinander.

Was die stoffliche Seite des neuen Katalysatorsystems betrifft, ist im einzelnen das folgende zu sagen:

(1) Das zur Herstellung der modifizierten Titankomponente (1) einzusetzende Titantetrachlorid (1.1.1) und (1.3.1) sollte ein bei Ziegler-Natta-Katalysatorsystemen übliches sein.

Der gleichfalls einzusetzende Benzolkarbonsäurealkylester (1.1.2) ist erfindungsgemäß ein Diester der Phthalsäure mit einem primären, vorzugsweise jedoch einem secundären oder tertiären, nicht mehr als acht, vorzugsweise nicht mehr als sechs Kohlenstoffatome aufweisenden Alkanol, insbesondere dem 2,2-Dimethylpropanol. Neben dem letztgenannten kommen als alkanolische Komponente des Diesters beispielsweise in Betracht n-Butanol, i-Butanol und tert.-Butanol sowie n-Pentanol und i-Pentanol.

Die in Rede stehenden Diester können eingesetzt werden als Einzelindividuen oder in Form von Gemischen aus zwei oder mehr Einzelindividuen; die in Stufe (1.1) und - gegebenenfalls - Stufe (1.3) einzusetzenden Diester können gleich oder verschieden sein.

Das zur Herstellung der modifizierten Titankomponente (1) ebenfalls einzusetzende Magnesiumalkoholat (1.2.2) kann ein übliches, der angegebenen Formel gehorchendes sein. Besonders geeignet sind die Alkoholate, die abgeleitet sind vom Ethyl-, n-Propyl-, i-Propyl, n-Butyl-, i-Butyl oder tert.-Buylalkohol. Auch die Alkoholate können als Einzelindividuen oder in Form von Gemischen aus zwei oder mehr Einzelindividuen eingesetzt werden.

Die Herstellung der modifizierten Ttankomponente (1) ist einfach und für den Fachmann ohne Erläuterungen möglich. Lediglich zu den Stufen (1.2) und (1.3) ist zu erwähnen, daß die Isolierung des jeweils resultierenden Feststoffs zweckmäßigerweise durch Absaugen, und in Stufe (1.3) die Abtrennung der verbleibenden flüssigen Phase

zweckmäßigerweise durch Waschen mit einem flüssigen Kohlenwasserstoff - bis dieser kein Titantetrachlorid mehr aufnimmt - erfolgt. Der hierbei in Betracht kommende flüssige Kohlenwasserstoff kann ein Kohlenwasserstoff der Art sein, die üblicherweise mit Titankomponenten für Katalysatorsysteme des Ziegler-Natta-Typs ohne Schaden für das Katalysatorsystem bzw. dessen Titankomponente zusammengebracht wird; - z.B. bei der Polymerisation von α-Monoolefinen. Als Beispiele für geeignete Kohlenwasserstoffe seien genannt: Pentane, Hexane, Heptane, Benzine und Cyclohexan.

(2) Als Aluminiumalkyle (2) mit der angegebenen Formel kommen die einschlägig üblichen, dieser Formel gehorchenden in Betracht; sie sind aus Literatur und Praxis so wohlbekannt, daß auf sie nicht näher eingegangen zu werden braucht. Als herausragender Vertreter sei beispielsweise genannt Triethylaluminium.

(3) Der das Katalysatorsystem vervollständigende Cokatalysator (3) ist erfindungsgemäß ein Trialkoxiphenylsilan mit nicht mehr als vier Kohlenstoffatomen pro Alkoxigruppe, insbesonder das Triethoxiphenylsilan. Neben dem letztgenannten kommen beispielsweise auch die folgenden Trialkoxiphenylsilane in Betracht: Tri-n-propoxiphenylsilan, Tri-n-butoxiphenylsilan.

Das erfindungsgemäße Verfahren erlaubt es, Homo- und Copolymerisate - auch Block-Copolymerisate - von $C_2$- bis $C_6$-α-Monoolefinen in vorteilhafter Weise herzustellen, wobei besonders geeignete zu polymerisierende α-Monoolefine Propylen, Buten-1 und Hexen-1, sowie - zur Copolymerisation - Ethylen sind.

<u>Beispiel</u>

Herstellen der modifizierten Titankomponente (1)

Es wird so verfahren, daß man zunächst

(1.1) in einer ersten Stufe
(1.1.1) 100 Gew.-Teile Titantetrachlorid mit
(1.1.2) 2,1 Gew.-Teilen des Diesters der Phthalsäure mit 2,2-Dimethylpropanol zusammenbringt und das Zusammengebrachte unter Rühren so lange auf einer Temperatur von etwa 105°C hält bis es unter Auflösung eines anfänglichen Niederschlages als homogene, orange-gelb gefärbte, Flüssigkeit (der man dann erlaubt, sich auf eine Temperatur von 80°C abzukühlen) vorliegt; dann

(1.2) in einer zweiten Stufe

(1.2.1) die aus Stufe (1.1) resultierende Flüssigkeit mit

(1.2.2) einem, einen Teilchendurchmesser von 0,5 bis 3 mm aufweisenden Magnesiumethylat

zusammenbringt, mit der Maßgabe, daß ein Molverhältnis Diester (1.1.2) aus Stufe (1.1) : Magnesiumalkoholat (1.2.2) von 1 : 8 gegeben ist, das Zusammengebrachte unter ständigem Rühren auf eine Temperatur im Bereich von 130 bis 135°C bringt und etwa 0,25 Stunden auf dieser Temperatur hält, worauf man den dabei resultierenden Feststoff unter Abtrennung der verbleibenden flüssigen Phase durch Absaugen mittels einer Glasfritte isoliert, und schließlich

(1.3) in einer dritten Stufe

(1.3.1) 100 Gew.-Teile Titantetrachlorid mit

(1.3.2) 4,5 Gew.-Teilen des aus Stufe (1.2) resultierenden Feststoffs

zusammenbringt, das Zusammengebrachte unter ständigem Rühren etwa 0,5 Stunden auf einer Temperatur im Bereich von 130 bis 135°C hält und den dabei resultierenden Feststoff - als die modifizierte Titankomponente (1) - unter Abtrennung der verbleibenden flüssigen Phase durch Absaugen mittels einer Glasfritte und Waschen mit n-Heptan bis zur Farblosigkeit der Waschflüssigkeit, isoliert.

Polymerisation

Ein Rührgefäß wird mit 500 ml n-Heptan, 0,2 mMol, gerechnet als Titan, der oben beschriebenen modifizierten Titankomponente (1), 10 mMol Aluminiumtriethyl als Auminiumalkyl (2) sowie 1 mMol Triethoxiphenylsilan als Cokatalysator (3) beschickt.

Die eigentliche Polymerisation wird unter ständigem Rühren bei 60°C während 3 Stunden durchgeführt mit Propylen als Monomer, dessen Druck während der Polymerisation konstant auf 1 bar gehalten wird.

Das Polymerisat wird hierbei mit einer Ergiebigkeit von 470 g Polypropylen pro g Titankomponente (1) erhalten; es weist 2,7 % in siedendem n-Heptan löslicher Anteile (als Maß für die Stereoregularität) auf und hat ausgezeichnete morphologische Eigenschaften, insbesondere eine sehr einheitliche Kornform.

Ku
5.12.83

Patentanspruch

Verfahren zum Herstellen von Homo- und Copolymerisaten von $C_2$- bis $C_6$-α-Monoolefinen bei Temperaturen von 20 bis 160°C und Drücken von 1 bis 100 bar mittels eines Ziegler-Natta-Katalysatorsystems aus

(1) einer modifizierten Titankomponente, die erhalten wird, indem man zunächst

(1.1) in einer ersten Stufe

(1.1.1) 100 Gew.-Teile Titantetrachlorid mit

(1.1.2) 1 bis 10 Gew.-Teilen eines Benzolcarbonsäurealkylesters

zusammenbringt und das Zusammengebrachte so lange auf einer Temperatur im Bereich von 50 bis 120°C hält, bis es als homogene Flüssigkeit vorliegt, dann

(1.2) in einer zweiten Stufe

(1.2.1) die aus Stufe (1.1) resultierende Flüssigkeit mit

(1.2.2) einem, einen Teilchendurchmesser von 0,05 bis 5,0 mm aufweisenden Magnesiumalkoholat der Formel $Mg(OD)_2$, worin D steht für einen einwertigen $C_1$- bis $C_8$-Kohlenwasserstoffrest gesättigt-aliphatischer und/oder aromatischer Natur,

zusammenbringt, mit der Maßgabe, daß ein Molverhältnis Benzolcarbonsäurealkylester (1.1.2) aus Stufe (1.1) : Magnesiumalkoholat (1.2.2) von 1 : 15 bis 1 : 2 gegeben ist, das Zusammengebrachte unter ständiger Durchmischung 0,1 bis 2 Stunden auf einer Temperatur im Bereich von 40 bis 180°C hält und den dabei resultierenden Feststoff unter Abtrennung der verbleibenden flüssigen Phase isoliert, und schließlich

(1.3) in einer dritten Stufe

(1.3.1) 100 Gewichtsteile Titantetrachlorid mit

(1.3.2) 1 bis 50 Gewichtsteilen des aus Stufe (1.2) resultierenden Feststoffs sowie - gegebenenfalls - zusätzlich

(1.3.3) bis zu 15 Gewichtsteilen des auch unter (1.1.2) eingesetzten Benzolcarbonsäurealkylesters

zusammenbringt, das Zusammengebrachte unter ständiger Durchmischung 0,1 bis 2 Stunden auf einer Temperatur im Bereich von 40 bis 180°C hält und den dabei resultierenden Feststoff - als die modifizierte Titankomponente (1) - unter Abtrennung der verbleibenden flüssigen Phase isoliert,

(2) einem Aluminiumalkyl der Formel

$$X - \underset{\displaystyle Z}{\underset{|}{Al}} - Y$$

worin stehen

X sowie

Y für eine nicht mehr als 8 Kohlenstoffatome aufweisende Alkylgruppe,

Z für eine nicht mehr als 8 Kohlenstoffatome aufweisende Alkylgruppe oder Chlor,

sowie

(3) einem Cokatalysator,

mit den Maßgaben, daß das Atomverhältnis Titan aus der modifizierten Titankomponente (1) : Aluminium aus dem Aluminiumalkyl (2) 1 : 10 bis 1 : 500 und das Molverhältnis Aluminumalkyl (2) : Cokatalysator (3) 10 : 8 bis 10 : 0,3 beträgt,

dadurch gekennzeichnet, daß

(i) als modifizierte Titankomponente (1) eine solche eingesetzt wird, bei deren Herstellung man als Benzolcarbonsäurealkylester unter (1.1.2) einen Diester der Phthalsäure mit einem primären, secundären oder tertiären, nicht mehr als acht Kohlenstoffatome aufweisenden Alkanol verwendet hat, und

(ii) als Cokatalysator (3) ein Trialkoxiphenylsilan mit nicht mehr als vier Kohlenstoffatomen pro Alkoxigruppe einsetzt.

Kur
5.12.83

0133267

Europäisches Patentamt

# EUROPÄISCHER RECHERCHENBERICHT

Nummer der Anmeldung

EP 84 10 8682

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | EP-A-0 017 895 (BASF)<br>* Anspruch *<br>--- | 1 | C 08 F 10/00<br>C 08 F 4/64 |
| Y | DE-A-3 241 999 (MITSUI)<br>* Ansprüche 1,8,12; Beispiele *<br>----- | 1 | |
| | | | RECHERCHIERTE SACHGEBIETE (Int. Cl.4) |
| | | | C 08 F |

Der vorliegende Recherchenbericht wurde für alle Patentansprüche erstellt.

| Recherchenort | Abschlußdatum der Recherche | Prüfer |
|---|---|---|
| DEN HAAG | 02-11-1984 | WEBER H. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument